**Europäisches Patentamt**

**European Patent Office**

**Office européen des brevets**

(11) Veröffentlichungsnummer: **0 214 375**
**A1**

# (12) EUROPÄISCHE PATENTANMELDUNG

(21) Anmeldenummer: **86107902.8**

(22) Anmeldetag: **10.06.86**

(51) Int. Cl.⁴: **B01J 32/00** , **B01J 35/04** , **//B01D53/36**

(30) Priorität: **12.09.85 DE 3532577**

(43) Veröffentlichungstag der Anmeldung:
**18.03.87 Patentblatt 87/12**

(84) Benannte Vertragsstaaten:
**AT BE CH DE FR GB IT LI LU NL SE**

(71) Anmelder: **DIDIER-WERKE AG**
**Lessingstrasse 16-18**
**D-6200 Wiesbaden(DE)**

(72) Erfinder: **Grimm, Daniel**
**Hauptstrasse 10**
**D-6229 Schlangenbad-Bärstadt(DE)**
Erfinder: **Heil, Klaus**
**Schillerstrasse 4**
**D-6200 Wiesbaden-Naurod(DE)**
Erfinder: **Kainer, Hartmut, Dr.**
**Sauerbruchstrasse 1a**
**D-6200 Wiesbaden 12(DE)**
Erfinder: **Stein, Hermann**
**Auf dem Köppel 2**
**D-6702 Bad Dürkheim(DE)**

(74) Vertreter: **Brückner, Raimund**
**c/o Didier-Werke AG Lessingstrasse 16-18**
**D-6200 Wiesbaden(DE)**

(54) **Kassette für Katalysatorplatten.**

(57) Die Erfindung bezieht sich auf eine Kassette für die Aufnahme von Katalysatorplatten (1) unter Freihaltung schlitzförmiger Kanäle (2) für die Hindurchführung katalytisch zu reinigender Fluide mit einem im wesentlichen kubischen Rahmen (3), in welchem wenigstens auf einander gegenüberliegenden Seiten Halterungen (4) zum Einschieben der Katalysatorplatten (1) angeordnet sind, wobei die Halterungen (4) nutartige Vertiefungen (5) aufweisen, in welche die Ränder der Katalysatorplatten (1) passen. Für eine möglichst einfache und feste Fixierung der Katalysatorplatten (1) in der Kassette ist vorgesehen, daß die Halterungen (4) aus einem Metalldrahtnetz (7) als statisches Element bestehen, welches mit mindestens einem Vermiculit oder ein unter Erwärmung ähnlich expandierendes Material und gegebenenfalls Zeolith enthaltenden Überzug (8) beschichtet ist.

Fig. 1

## Kassette für Katalysatorplatten

Die Erfindung bezieht sich auf eine Kassette für die Aufnahme von Katalysatorplatten unter Freihaltung schlitzförmiger Kanäle für die Hindurchführung katalytisch zu reinigender Fluide, vorzugsweise Gase, mit einem mit anderen gleichartigen Rahmen stapelbaren, im wesentlichen kubischen Rahmen, in welchem auf wenigstens zwei einander gegenüberliegenden Seiten Halterungen zum Einschieben der Katalysatorplatten angeordnet sind, wobei die Halterungen nutartige Vertiefungen aufweisen, in welche die Ränder der Katalysatorplatten passen.

Aufgabe der vorliegenden Erfindung ist es, bei einer Kassette dieser Art die Möglichkeit einer einfachen und festen, aber dennoch elastischen Fixierung der Katalysatorplatten zu schaffen.

Diese Aufgabe wird im wesentlichen dadurch gelöst, daß die Halterungen aus einem Metalldrahtnetz als statisches Element bestehen, welches mit mindestens einem Vermiculit oder ein unter Erwärmung ähnlich expandierendes Material enthaltenden Überzug beschichtet ist. Unter Metalldrahtnetz sollen hierbei alle flächigen aus Metalldraht bestehenden Gebilde verstanden werden, welche man üblicherweise als Gewebe, Gewirke, Geflechte oder dergleichen bezeichnet. Gleichwirkend sind jedoch auch z.B. aus entsprechend dünnem Material gefertigte Lochbleche, Streckmetall und dergleichen, welche aufgrund von Vorsprüngen und/oder Durchbrechungen einen festen und dauerhaften Sitz des Überzugs gewährleisten können. Derartige Metalldrahtnetze können einfach in die gewünschte Form mit nutartigen Vertiefungen, in welche die Katalysatorplatten mit ihren Rändern hineingeschoben werden können, geformt und gepreßt und mit dem gewünschten Überzug beschichtet werden. Das als Bestandteil des Überzugs vorgesehene Vermiculit oder dergleichen expandierendes Material beginnt bei ca. 200 °C zu expandieren und spannt dadurch die in die Halterungen eingeschobenen Katalysatorplatten in ihren Führungsnuten fest. Die Einspannkräfte können durch den Anteil an Vermiculit oder dergleichen Material in dem Überzug bestimmt werden. Dadurch können die Katalysatorplatten auf sehr einfache Weise in der Kassette festgelegt werden, wobei auch ein nachträgliches Auswechseln aufgrund der Nachgiebigkeit des Überzugs ohne weiteres möglich ist.

Gemäß einem weiteren Erfindungsvorschlag enthält der Überzug Zeolith. Hierdurch wird dem Problem begegnet, daß die vielen katalytisch hochwirksamen Werkstoffe stark hygroskopisch sind und bei der Fertigung der Katalysatorplatten, ihrer Montage sowie im laufenden Einsatz und Betrieb im Gasreinigungsreaktor feuchtigkeitsfrei gehalten werden müssen. Der Zusatz von Zeolith wirkt als Trocknungsmittel und beispielsweise zusätzlich als Katalysator bei dem Entstickungsprozeß; er halt die Katalysatorplatten während ihrer Temperung, Lagerung, Montage und im Betrieb frei von schädlicher Luftfeuchtigkeit. Die Erwärmung des Zeoliths bei Aufnahme eventuell vorhandener Luftfeuchtigkeit bewirkt zum anderen eine günstige Klimatisierung der Kassetten für die Katalysatorplatten. Die Trocknung der Zeolithe kann bei laufendem Betrieb des Reaktors erfolgen.

In Weiterbildung des Erfindungsgedankens wird vorgeschlagen, daß der Überzug eine poröse Fasermatrix aufweist. Hierdurch werden die körnigen bzw. plättchenförmigen Zuschlagstoffe des Überzugs eingebunden und die Fasern können außerdem durch das Metalldrahtnetz verfilzen und dadurch für eine gute Haftung des Überzugs an dem Metalldrahtnetz als statisches Element dienen.

Der Überzug weist vorzugsweise als Binder Zellulose, Stärke, Harze und/oder andere Binder auf, welche die Wirkungsweise der Zuschlagstoffe nicht beeinträchtigt und der Überzug die erforderliche Porosität und Flexibilität beibehält.

Besonders vorteilhaft ist es, wenn der Überzug beidseitig auf das Metallgitternetz aufgetragen ist. Hierdurch findet der beidseitige, als Dichtungs-bzw. Befestigungsmaterial für die Katalysatorplatten dienende Überzug nicht nur einen besonders guten Halt an dem Metalldrahtnetz, da die Überzugsschichten durch die Durchbrechungen des Metalldrahtnetzes miteinander in Verbindung stehen, sondern der Überzug dient wegen seines Vermiculit-oder dergleichen Materialgehaltes selbst zur Einspannung der Halterung in die Kassette, so daß insgesamt ein fester Verbund entsteht. Auch hier sind die Einspannkräfte durch die Vermiculit-oder dergleichen Materialmenge steuerbar. Die Verfilzung der Fasern kann in diesem Fall besonders gut durch das Metalldrahtnetz hindurch erfolgen.

Überzüge mit einer Schichtdicke zwischen etwa 0,5 und 2 mm sind zu bevorzugen.

Die Erfindung bezieht sich auch auf ein Verfahren zur Herstellung einer Kassette der zuvor genannten Art. Hierbei bringt man das Metalldrahtnetz in die gewünschte Form der Halterung und mit dem Überzug; die so fertiggestellten Halterungen werden in den Rahmen eingesetzt. Anschließend werden die Katalysatorplatten in die nutartigen Vertiefungen der Halterungen eingeführt und die Einheit aus Rahmen, Halterungen und Katalysatorplatten bei einer Temperatur von etwa 450 °C für etwa 10 bis 24 h getempert. Hierbei erhält nicht nur das Katalysatormaterial die notwendigen Eigenschaften, sondern die Katalysatorplatten werden auch durch die Ausdehnung des Vermiculits oder dergleichen Materials in die Halterungen und gegebenenfalls auch die Halterungen in die Kassette eingespannt.

Die Beschichtung des Metalldrahtnetzes kann durch Tauchen, Streichen, Spritzen und dergleichen Auftragsverfahren erfolgen.

Weitere Ziele, Merkmale, Vorteile und Anwendungsmöglichkeiten der vorliegenden Erfindung ergeben sich aus der nachfolgenden Beschreibung von Ausführungsbeispielen anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:

Fig. 1 ausschnittsweise im Schnitt eine die Erfindung aufweisende Kassette, und

Fig. 2a bis Fig. 2d schematisch einige andere bei der Erfindung anwendbaren Ausführungsformen von Halterungen.

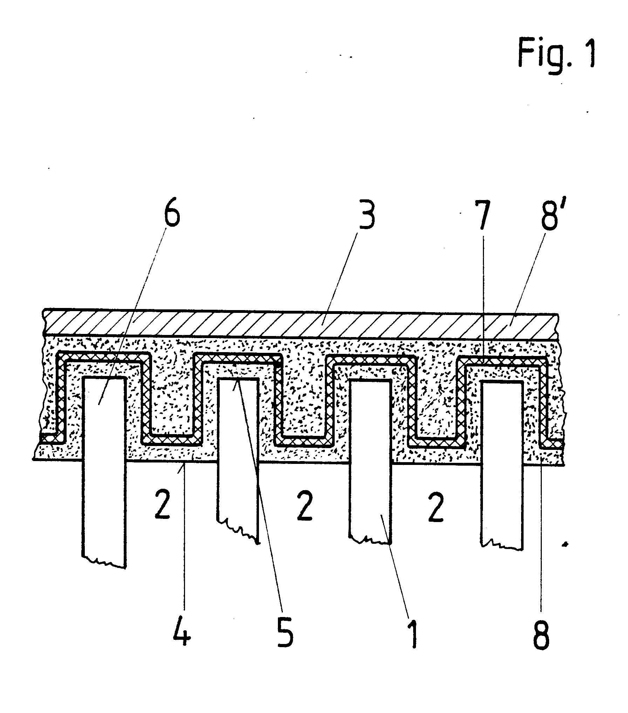

Eine Kassette für die Aufnahme von Katalysatorplatten 1 unter Freihaltung schlitzförmiger Kanäle 2 für die Hindurchführung katalytisch zu reinigender Fluide besteht nach Fig. 1 aus einem im wesentlichen kubischen Rahmen 3, von welchem lediglich eine Seitenwandung ausschnittsweise dargestellt ist und auf zwei einander gegenüberliegenden Seiten vorgesehenen Halterungen 4 zum Einschieben der Katalysatorplatten 1. Die Halterungen 4 haben zu diesem Zweck nutenartige Vertiefungen oder Führungen 5, in welche die Katalysatorplatten 1 mit ihren Rändern 6 passen und demzufolge eingeschoben werden können. Die Halterungen 4 bestehen aus einem Metalldrahtnetz 7 als statisches Element, welches bei dem in Fig. 1 veranschaulichten Ausführungsbeispiel beidseitig mit einem Überzug 8 beschichtet ist. Der Überzug 8 enthält Vermiculit, welches ab etwa 200 °C expandiert. Dadurch werden die Ränder 6 der Katalysatorplatten 1 zwischen den die im Querschnitt rechteckförmigen Vertiefungen 5 bildenden, auf dem entsprechend geformten Metalldrahtnetz 7 gehaltenen Abschnitten des Überzugs 8 eingespannt und dadurch sicher und flexibel gehalten. Da in dem dargestellten Falle auch die Außenfläche des Metalldrahtnetzes 7 mit dem Vermiculit enthaltenden Überzug 8' versehen ist, welcher unter anderem auch die nach außen gewandten Vertiefungen des Metalldrahtnetzes 7 ausfüllt und andererseits an der Seitenwandung des Rahmens 3 angrenzt, wird auch die Halterung 4 selbst in dem Rahmen 3 eingespannt, wenn das Vermiculit expandiert.

Die Überzüge 8, 8' enthalten vorzugsweise auch Zeolith, um die hygroskopischen Katalysatorplatten 1 frei von schädlicher Luftfeuchtigkeit zu halten. Die Überzüge 8, 8' können ferner zur Einbindung der körnigen bzw. plättchenförmigen Zuschlagstoffe Vermiculit und Zeolith eine poröse Fasermatrix aufweisen. Als Binder des Überzugs 8 kann man in erster Linie Zellulose, Stärke und/oder Harze einsetzen. Die Überzüge 8, 8' haben vorzugsweise eine Schichtdicke zwischen etwa 0,5 und 2 mm.

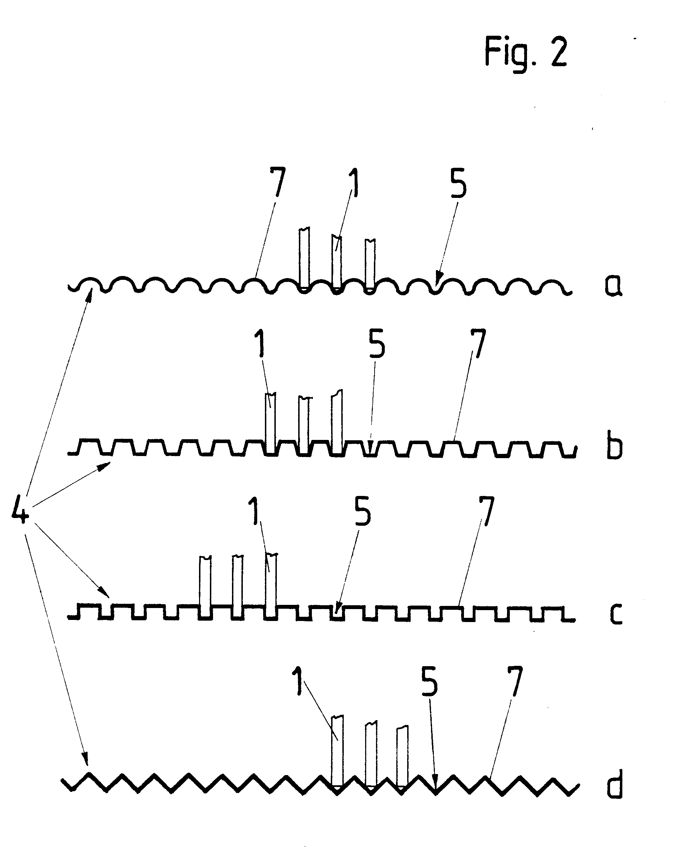

Fig. 2a bis d veranschaulicht verschiedene andere Formen des Metalldrahtnetzes 7 ausreichender Temperaturbeständigkeit mit verschieden ausgestalteten nutenartigen Vertiefungen 5 für die Aufnahme des jeweiligen Plattenrandes 6. Diese sind im Falle a wellenförmig, im Falle b trapezförmig, im Falle c rechteckförmig und im Falle d dreieckförmig.

Ein Überzug der erfindungsgemäßen Art hat beispielsweise eine Zusammensetzung von 10 bis 50 % Fasern (Mineral-, Steinwolle-, Keramik-oder Glasfasern), 5 bis 50 % Vermiculit, 5 bis 50 % Zeolith, 1 bis 10 % Methylzellulose (bzw. Stärke oder Phenolharz) und Rest Wasser (bis 50 %).


Bezugszeichenliste:

1 Katalysatorplatten
2 Kanäle
3 Rahmen
4 Halterungen
5 Vertiefungen
6 Ränder
7 Metalldrahtnetz
8 Überzug
8' Überzug


**Ansprüche**

1. Kassette für die Aufnahme von Katalysatorplatten (1) unter Freihaltung schlitzförmiger Kanäle (2) für die Hindurchführung katalytisch zu reinigender Fluide, vorzugsweise Gase, mit einem mit anderen gleichartigen Rahmen (3) stapelbaren, im wesentlichen kubischen Rahmen (3), in welchem auf wenigstens zwei einander gegenüberliegenden Seiten Halterungen (4) zum Einschieben der Katalysatorplatten (1) angeordnet sind, wobei die Halterungen (4) nutartige Vertiefungen (5) aufweisen, in welche die Ränder (6) der Katalysatorplatten (1) passen, dadurch gekennzeichnet, daß die Halterungen (4) aus einem Metalldrahtnetz (7) als statisches Element bestehen, welches mit mindestens einem Vermiculit oder ein unter Erwärmung ähnlich expandierendes Material enthaltenden Überzug (8) beschichtet ist.

2. Kassette naxch Anspruch 1, dadurch gekennzeichnet, daß der Überzug (8) Zeolith enthält.

3. Kassette nach Anspruch 1 oder 2, dadurch gekennzeichnet, daß der Überzug (8) eine poröse Fasermatrix enthält.

4. Kassette nach einem der Ansprüche 1 bis 3, dadurch gekennzeichnet, daß der Überzug (8) Zellulose, Stärke und/oder Harze als Binder enthält.

5. Kassette nach einem der Ansprüche 1 bis 4, dadurch gekennzeichnet, daß der Überzug (8) beidseitig auf das Metallgitternetz (7) aufgetragen ist.

6. Kassette nach einem der Ansprüche 1 bis 5, dadurch gekennzeichnet, daß der Überzug (8) eine Schichtdicke zwischen etwa 0,5 und 2 mm hat.

7. Verfahren zur Herstellung einer Kassette nach einem der Ansprüche 1 bis 6, dadurch gekennzeichnet, daß man das Metalldrahtnetz (7) in die gewünschte Form der Halterung (4) bringt und mit dem Überzug (8) beschichtet, daß man die Halterung (4) in den Rahmen (3) einsetzt, anschließend die Katalysatorplatten (1) in die nutartigen Vertiefungen (5) der Halterung (4) einsetzt und die Einheit aus Rahmen (3), Halterung (4) und Katalysatorplatten (1) bei einer Temperatur von etwa 450 °C für etwa 10 bis 24 h tempert.

Fig. 1

Fig. 2

| EINSCHLÄGIGE DOKUMENTE | | | EP 86107902.8 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | <u>DE - A1 - 2 936 927</u> (SAKAI CHEMICAL INDUSTRY) <br> * Fig. 4; Beispiele; Ansprüche * <br> -- | 1,7 | B 01 J 32/00 <br> B 01 J 35/04 <br> // B 01 D 53/36 |
| A | <u>DE - A1 - 2 424 401</u> (JAPAN GASOLINE) <br> * Ansprüche * <br> -- | 1 | |
| A | <u>DE - A1 - 2 937 757</u> (DEGUSSA) <br> * Ansprüche; Fig. 1; Seite 5, Zeilen 1-30 * <br> -- | 1 | |
| A | <u>US - A - 4 439 350</u> (JONES) <br> * Fig. 4,5; Ansprüche * <br> ---- | 1 | RECHERCHIERTE SACHGEBIETE (Int Cl 4) <br><br> B 01 J <br> B 01 D |

Der vorliegende Recherchenbericht wurde für alle Patentansprüche erstellt

| Recherchenort | Abschlußdatum der Recherche | Prüfer |
|---|---|---|
| WIEN | 16-12-1986 | TENGLER |